# EUROPEAN PATENT SPECIFICATION

(11) **EP 2 853 838 B1**
(45) Date of publication and mention of the grant of the patent: **30.03.2016**
(21) Application number: 14186603.8
(22) Date of filing: 26.09.2014
(51) Int. Cl.: F24H 4/02, F25B 13/00, F24D 19/00, F24H 9/20, F25B 47/02

(54) **Hot water generator**
Heißwassererzeuger
Générateur d'eau chaude

(30) Priority: 26.09.2013 JP 2013199517
(43) Date of publication of application: 01.04.2015
(73) Proprietor: Panasonic Corporation, Kadoma-shi Osaka 571-8501 (JP)
(72) Inventor: Moriwaki, Shunji, Osaka, 540-6207 (JP); Aoyama, Shigeo, Osaka, 540-6207 (JP); Horiuchi, Toshihiro, Osaka, 540-6207 (JP); Arashima, Hiroshi, Osaka, 540-6207 (JP); Mekata, Masato, Osaka, 540-6207 (JP)
(74) Representative: Eisenführ Speiser

(56) References cited:
- EP-A1- 1 980 802
- EP-A1- 2 581 689
- JP-A- 2009 041 860
- JP-A- 2013 185 808

## Description

### [TECHNICAL FIELD]

The present invention relates to a hot water generator utilizing a refrigeration cycle.

### [BACKGROUND TECHNIQUE]

A conventional hot water generator is formed by annularly connecting a compressor, a refrigerant-liquid heat exchanger (radiator), an expansion valve and a refrigerant-air heat exchanger (evaporator) to one another through a refrigerant pipe, the hot water generator radiates heat of refrigerant by means of the radiator, thereby heating utilizing-side heating medium. The heated heating medium is utilized for heating a room or supplying hot water.

Here, most of a heat quantity for heating the utilizing-side heating medium is obtained in such a manner that refrigerant absorbs heat from air in the evaporator. When heat is absorbed, since low temperature refrigerant flowing in a pipe of the evaporator and outside air exchange heat, moisture in the air condenses in the evaporator and frost adheres to a surface of the evaporator in some cases. If frost adheres to the evaporator, heat transfer efficiency of the evaporator is deteriorated, a heat absorption quantity of refrigerant is reduced and operation efficiency of the hot water generator is deteriorated. Therefore, a defrosting operation is generally carried out (see patent document 1 for example).

Fig. 6 shows a conventional hot water generator described in the japanese patent publication No. 5 113 447.

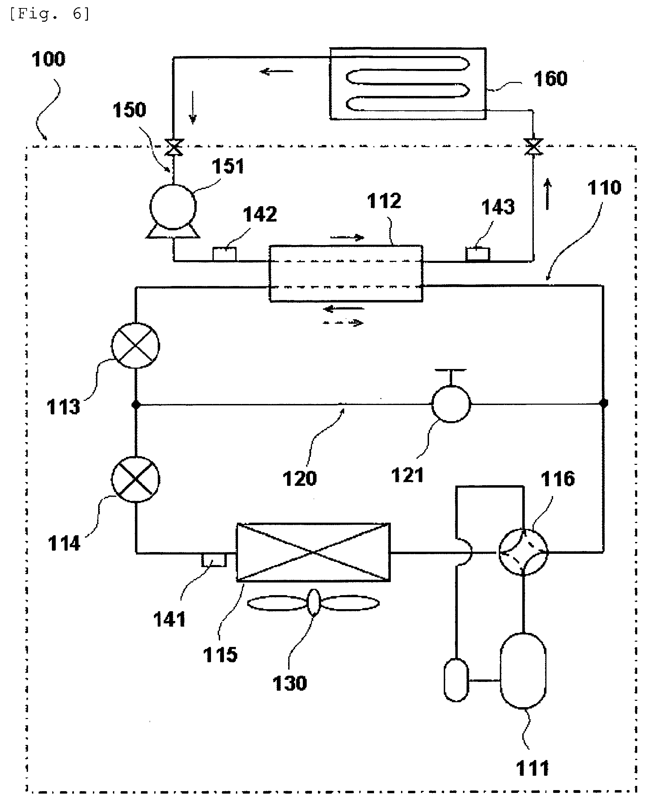

As shown in Fig. 6, the hot water generator 100 includes a refrigerant circuit 110 through which refrigerant circulates, and a heating medium circuit 150 through which hot water circulates. The refrigerant circuit 110 is provided with a bypass passage 120.

The refrigerant circuit 110 is formed by annularly connecting a compressor 111, a refrigerant flow path of a radiator 112, a first expansion valve 113, a second expansion valve 114 and an evaporator 115 to one another through a pipe. The refrigerant circuit 110 is provided with a four-way valve 116 for switching between a heating operation and a defrosting operation. A fan 130 is provided in the vicinity of the evaporator 115 for flowing air to the evaporator 115.

One end of the bypass passage 120 is connected to the refrigerant circuit 110 between the four-way valve 116 and the radiator 112, and the other end of the bypass passage 120 is connected to the refrigerant circuit 110 between the first expansion valve 113 and the second expansion valve 114. The bypass passage 120 is provided with a solenoid valve 121.

The heating medium circuit 150 is formed by annularly connecting, through a pipe, a heating medium flow path provided in the radiator 112 and a utilizing-side radiator 160 such as a heating terminal as typified by a floor heating panel. The heating medium circuit 150 is provided with a circulation pump 151. Water is supplied to the radiator 112 by the circulation pump 151, and water (hot water) which absorbs heat from refrigerant in the radiator 112 and which is heated circulates through the utilizing-side radiator 160, thereby heating a room.

The hot water generator 100 includes a temperature sensor 141 for detecting temperature (evaporator inlet temperature) Tei of refrigerant which flows into the evaporator 115 in the refrigerant circuit 110, a temperature sensor 142 for detecting temperature (entering-water temperature) Twi of water which flows into a water flow path of the radiator 112 in the heating medium circuit 150, and a temperature sensor 143 for detecting temperature (outgoing-water temperature) Two of water which flows out from the water flow path of the radiator 112.

In the heating operation, if evaporator inlet temperature Tei detected by the temperature sensor 141 becomes equal to or lower than a predetermined value, it is determined that frost adheres to the evaporator 115, and thus, the four-way valve 116 is switched to a reversed cycle side (arrow of broken line in the drawing) and the fan 130 is stopped. According to this, a reversed cycle defrosting operation is started. In the reversed cycle defrosting operation, refrigerant flows through the compressor 111, the four-way valve 116, the evaporator 115, the second expansion valve 114, the first expansion valve 113 and the radiator 112 in this order.

During the reversed cycle defrosting operation, if the entering-water temperature and the outgoing-water temperature detected by the temperature sensor 142 and the temperature sensor 143 become equal to or lower than predetermined temperatures for given time, the solenoid valve 121 is opened so that a portion or all of refrigerant flows into the bypass passage 120, i.e., so that an amount of refrigerant flowing into the radiator 112 is reduced, thereby avoiding a case where water in a water-side flow path of the radiator 112 freezes or expands and the radiator 112 is destroyed.

### [PRIOR ART DOCUMENT]

Document JP 2009041860 discloses a hot water generator according to the preamble of claim 1.

### [PATENT DOCUMENT]

[Patent Document 1] Japanese Patent Publication No.5113447

### [SUMMARY OF THE INVENTION]

### [PROBLEM TO BE SOLVED BY THE INVENTION]

In the conventional hot water generator 100, when a portion of low temperature refrigerant which flows out from the evaporator 115 during the reversed cycle defrosting operation is made to flow into the radiator 112, temperature of the refrigerant which flows into the radiator 112 becomes extremely low. Hence, when a flow rate of water which circulates through the heating medium circuit is small, there is a problem that water freezes in the radiator 112 and a volume of water expands, the radiator 112 is damaged, and reliability of the hot water generator 100 is deteriorated.

In the conventional hot water generator 100, when all of low temperature and low pressure refrigerant which flows out from the evaporator 115 during the reversed cycle defrosting operation bypasses toward a suction side of the compressor 111, it is possible to avoid a case where water in a water-side flow path of the radiator 112 freezes and the radiator 112 is destroyed. However, a large amount of liquid refrigerant which flows out from the evaporator 115 adversely returns to the compressor 111 without absorbing heat.

According to this, pressure of refrigerant which is sucked into the compressor 111 is lowered, and a degree of superheat of the refrigerant discharged from the compressor 111 is lowered. Therefore, time elapsed until the reversed cycle defrosting operation is completed becomes long. As a result, there is a problem that temperature of water flowing through the heating medium circuit is lowered, and comfort of a user of the utilizing-side radiator 160 is deteriorated, and since liquid refrigerant flows into the compressor 111, lubricating oil is diluted, and reliability of the compressor 111 is lowered.

The present invention has been accomplished to solve the conventional problems, and it is an object of the invention to provide a hot water generator capable of preventing a compressor and a radiator from being damaged, and capable of carrying out a defrosting operation while restraining temperature of water which flows through a utilizing-side radiator from lowering.

### [MEANS FOR SOLVING THE PROBLEM]

To solve the conventional problems, the present invention provides a hot water generator including: a refrigerant circuit formed by annularly connecting, through a refrigerant pipe to one another, a compressor for compressing refrigerant, flow path switching means for switching flowing directions of the refrigerant, a first heat exchanger for exchanging heat between the refrigerant and liquid, a decompressor for decompressing the refrigerant, and a second heat exchanger for exchanging heat between the refrigerant and air; a bypass passage for connecting the refrigerant pipe between a discharge side of the compressor and the first heat exchanger to the refrigerant pipe between the decompressor and a suction side of the compressor, or to a compression chamber of the compressor, an opening and closing device for opening and closing the bypass passage; and a control device for executing a plurality of operation modes, wherein the plurality of operation modes include a first operation mode for making the refrigerant discharged from the compressor flow into the second heat exchanger through the flow path switching means, and for closing the opening and closing device, and a second operation mode for making the refrigerant discharged from the compressor flow into the first heat exchanger through the flow path switching means, and for opening the opening and closing device, and wherein the control device is configured to shift the operation mode to the second operation mode, when temperature of the first heat exchanger becomes lower than predetermined temperature during the first operation mode.

According to this, it is possible to defrost the second heat exchanger by the first operation mode which makes high temperature and high pressure refrigerant flow into the second heat exchanger. When there is a possibility that liquid which flows through the first heat exchanger freezes during the first operation mode, the second operation mode is executed. As a result, since the high temperature and high pressure refrigerant discharged from the compressor flows into the first heat exchanger, temperature of the liquid rises. A portion of the refrigerant discharged from the compressor bypasses from the bypass passage, pressure of the refrigerant sucked into the compressor rises and as a result, temperature of refrigerant which flows through the second heat exchanger rises.

### [EFFECT OF THE INVENTION]

According to the present invention, it is possible to provide a hot water generator capable of defrosting a second heat exchanger while preventing a compressor and a first heat exchanger from being damaged.

### [BRIEF DESCRIPTION OF THE DRAWINGS]

Fig. 1 is a schematic block diagram of a hot water generator in an embodiment of the present invention;
Fig. 2 is a Mollier diagram in a reversed cycle defrosting operation of the hot water generator;
Fig. 3 is a Mollier diagram in a normal cycle defrosting operation of the hot water generator;
Fig. 4 is a Mollier diagram when the normal cycle defrosting operation of the hot water generator is shifted to a heating operation;
Fig. 5 is a control flowchart in a defrosting operation of the hot water generator; and
Fig. 6 is a schematic block diagram of a conventional hot water generator.

### [MODE FOR CARRYING OUT THE INVENTION]

The first aspect of the present invention provides a hot water generator including: a refrigerant circuit formed by annularly connecting, through a refrigerant pipe to one another, a compressor for compressing refrigerant, flow path switching means for switching flowing directions of the refrigerant, a first heat exchanger for exchanging heat between the refrigerant and liquid, a decompressor for decompressing the refrigerant, and a second heat exchanger for exchanging heat between the refrigerant and air; a bypass passage for connecting the refrigerant pipe between a discharge side of the compressor and the first heat exchanger to the refrigerant pipe between the decompressor and a suction side of the compressor, or to a compression chamber of the compressor, an opening and closing device for opening and closing the bypass passage; and a control device for executing a plurality of operation modes, wherein the plurality of operation modes include a first operation mode for making the refrigerant discharged from the compressor flow into the second heat exchanger through the flow path switching means, and for closing the opening and closing device, and a second operation mode for making the refrigerant discharged from the compressor flow into the first heat exchanger through the flow path switching means, and for opening the opening and closing device, and wherein the control device is configured to shift the operation mode to the second operation mode, when temperature of the first heat exchanger becomes lower than predetermined temperature during the first operation mode.

According to this, it is possible to defrost the second heat exchanger (evaporator) by the first operation mode. Further, temperature of liquid which flows through the first heat exchanger (radiator) during the first operation mode (defrosting operation) is detected, and it is possible to determined whether there is a possibility that liquid freezes from physical properties of the liquid and from a result of an experiment. When temperature of the liquid becomes equal to or lower than predetermined temperature at which there is a possibility that the liquid freezes, the first operation mode is shifted to the second operation mode. Therefore, high temperature and high pressure refrigerant discharged from the compressor flows into the radiator, and the temperature of liquid rises. In the second operation mode, a portion of refrigerant (discharged refrigerant) discharged from the compressor bypasses from the bypass passage, heat radiation loss in the radiator and the refrigerant pipe is reduced. Further, since the portion of refrigerant bypasses, an amount of refrigerant circulating through the refrigeration cycle is reduced, pressure loss in the refrigerant pipe is reduced, and pressure (suction pressure) of refrigerant which is sucked into the compressor rises. As a result, temperature of refrigerant which flows into the evaporator rises. Further, since the discharged refrigerant bypasses, enthalpy of refrigerant (suction refrigerant) sucked into the compressor rises.

By defrosting the second heat exchanger while using the first operation mode and the second operation mode in this manner, temperature of liquid flowing through the radiator during the defrosting operation does not become lower than the temperature at which the liquid freezes, and it is possible to defrost the evaporator while preventing the radiator from being destroyed by freezing of the liquid. Hence, reliability of the hot water generator is enhanced. Further, the defrosting time is shortened by the temperature rise of refrigerant flowing into the evaporator. In the second operation mode, since liquid flowing through the radiator is heated, reduction in temperature of liquid flowing through the utilizing-side heat exchanger such as the heating terminal is suppressed, and comfort of a user is enhanced. Since the high temperature and high pressure refrigerant is bypassed, an amount of liquid-phase refrigerant which returns to the compressor is reduced, and it is possible to prevent the compressor from being damaged by dilution of the lubricating oil.

According to a second aspect of the invention, in the first aspect of the invention, the control device is configured to operate the opening and closing device after the control device operates the flow path switching means, when the first operation mode is shifted to the second operation mode.

According to this, when temperature of the radiator becomes equal to or lower than the predetermined temperature at which there is a possibility that liquid freezes, since the flow path is first switched by the flow path switching means, it is possible to swiftly supply the high temperature and high pressure refrigerant to the radiator and to heat the radiator. Further, since the opening and closing device is operated after the high temperature and high pressure refrigerant is supplied to the radiator, the radiator is heated when the operation mode is shifted to the second operation mode. Hence, a quantity of heat dissipated by refrigerant in the radiator during the second operation mode is reduced and as a result, it is possible to make the refrigerant flow into the evaporator in a state where the refrigerant is maintained at high pressure and high temperature.

Therefore, a difference between refrigerant temperature and frost temperature is secured in the evaporator, and frost is melted immediately after the operation mode is shifted to the second operation mode. Hence, the defrosting time can be shortened.

According to a third aspect of the invention, in the first or second aspect, the plurality of operation modes include a third operation mode for making the refrigerant discharged from the compressor flow into the first heat exchanger through the flow path switching means, and for closing the opening and closing device, and the control device is configured to operate the compressor such that operation frequency of the compressor when the third operation mode starts becomes smaller than a maximum value of operation frequency of the compressor during the second operation mode.

According to this, after the defrosting operation executed in the second operation mode is completed, and before the heating operation of liquid executed in the third operation mode is started, operation frequency of the compressor is lowered, and a circulation amount of refrigerant which flows through the refrigerant circuit is reduced. Hence, pressure (discharge pressure) of refrigerant discharged from the compressor in the refrigerant circuit is lowered, and pressure (suction pressure) of refrigerant sucked into the compressor rises.

Therefore, when the defrosting operation executed in the second operation mode is completed, suction pressure rises and thus refrigerant temperature in the evaporator rises, and frost remaining on a surface of the evaporator can completely be melted. When the second operation mode is shifted to the normal heating operation executed in the third operation mode, a difference between discharge pressure and suction pressure is reduced. Therefore, the opening and closing device does not operate in a state where an excessive pressure difference is generated, and it is possible to prevent operation failure and damage of the opening and closing device.

An embodiment of the present invention will be described with reference to the drawings. The invention is not limited to the embodiment.

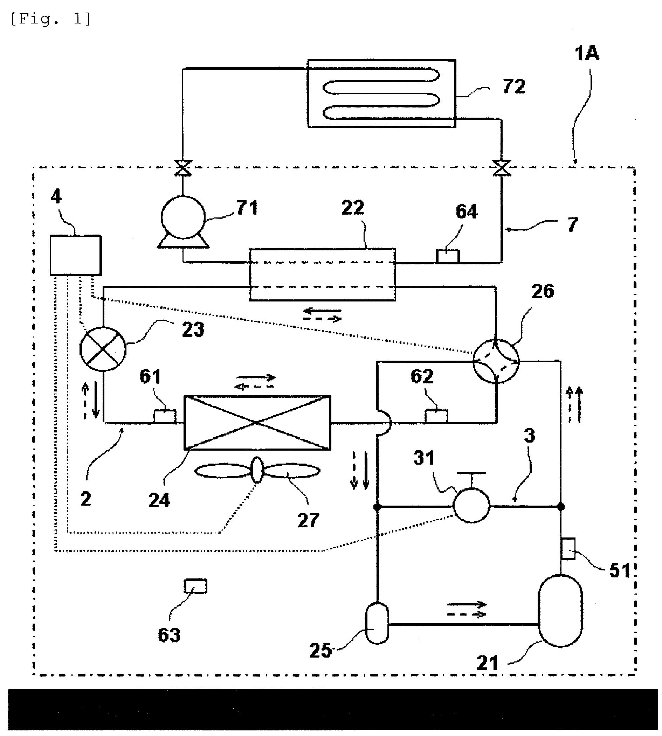

Fig. 1 is a schematic block diagram of a hot water generator in an embodiment of the present invention. In Fig. 1, the hot water generator 1A includes a refrigeration cycle having a refrigerant circuit 2 and a bypass passage 3 through which refrigerant flows, a control device 4, and a pump 71 configuring a heating medium circuit 7. Liquid flows through the heating medium circuit 7. As refrigerant, it is possible to use HFC refrigerant such as non-azeotropic refrigerant mixture like R407C, and pseudo-azeotropic refrigerant mixture like R410A, or to use single refrigerant such as carbon dioxide. As liquid, it is possible to use heating medium such as water and antifreeze liquid. In this embodiment, a case where HFC refrigerant is used as refrigerant and water is used as heating medium will be described as an example.

The refrigerant circuit 2 is configured by annularly connecting a compressor 21, a radiator (first heat exchanger) 22 which is a water heat exchanger, an expansion valve (decompressor) 23, and an evaporator (second heat exchanger) 24 which is an air heat exchanger to one another through a refrigerant pipe. In this embodiment, an accumulator 25 which separates gas and liquid from each other is provided between the evaporator 24 and the compressor 21. The refrigerant circuit 2 is provided with a four-way valve (flow path switching means) 26 for switching between a heating operation for producing hot water in the radiator 22 and a defrosting operation for defrosting the evaporator 24.

The evaporator 24 exchanges heat between air and refrigerant which flows through a refrigerant pipe. An outdoor fan (blast means) 27 is provided in the vicinity of the evaporator 24. The outdoor fan 27 blows air into the evaporator 24. The radiator 22 exchanges heat between refrigerant and water, and produces hot water or cold water. The radiator 22 includes a refrigerant flow path through which refrigerant flows and a heating medium flow path through which water flows. As a decompressor 23, it is possible to use an electric expansion valve, a capillary tube, and an expansion device for collecting enthalpy of refrigerant and expanding the refrigerant as power. If the expansion device is employed as the decompressor 23, the number of rotations of the expansion device is controlled by a power generator which is connected to the expansion device, and a decompression degree of refrigerant is adjusted. In this embodiment, a case where an electric expansion valve is used as the decompressor 23 will be described as an example.

The four-way valve 26 can switch circulation directions of refrigerant which flows through the refrigerant circuit 2. That is, the four-way valve 26 can switch between a normal cycle and a reversed cycle. In the normal cycle, refrigerant flows through the compressor 21, the four-way valve 26, the radiator 22, the expansion valve 23, the evaporator 24, the four-way valve 26 and the accumulator 25 in this order. In the reversed cycle, refrigerant flows through the compressor 21, the four-way valve 26, the evaporator 24, the expansion valve 23, the radiator 22, the four-way valve 26 and the accumulator 25 in this order. That is, the four-way valve 26 can switch the circulation directions of refrigerant flowing through the refrigerant circuit 2 between the normal cycle and the refrigeration cycle. In Fig. 1, arrows of solid line show a flowing direction of refrigerant in the normal cycle, and arrows of broken line show a flowing direction of refrigerant in the refrigeration cycle.

In addition to the refrigerant circuit 2, the refrigeration cycle of the present invention also includes a bypass passage 3 having a two-way valve (opening and closing device) 31. One end of the bypass passage 3 is connected the refrigerant pipe (high-pressure side refrigerant pipe) between a discharge side of the compressor 21 and the radiator 22 of the refrigerant pipe which configures the refrigerant circuit 2. That is, the one end of the bypass passage 3 is connected to the refrigerant pipe between the compressor 21 and the four-way valve 26, or connected to the refrigerant pipe between the four-way valve 26 and the radiator 22. The other end of the bypass passage 3 is connected to the refrigerant pipe (low-pressure side refrigerant pipe) between the expansion valve 23 and a suction side of the compressor 21 of the refrigerant pipe which configures the refrigerant circuit 2. Here, if the suction side refrigerant pipe of the compressor 21 is provided with the accumulator 25, it is preferable that the other end of the bypass passage 3 is connected to an upstream side refrigerant pipe of the accumulator 25 with respect to the circulation direction of refrigerant.

In this embodiment, the bypass passage 3 is provided such that the discharge side refrigerant pipe of the compressor 21 and the suction side of the compressor 21, i.e., the upstream side refrigerant pipe of the accumulator 25 are connected to each other as shown in Fig. 1.

The other end of the bypass passage 3 may be connected to a compression chamber of the compressor 21. According to this, the compressor 21 includes an injection mechanism in which discharged refrigerant flows into the compression chamber of the compressor 21.

The two-way valve 31 has an opening and closing function of the bypass passage 3. The two-way valve 31 is used as the opening and closing device in this embodiment, but in addition to the opening and closing function, it is also possible to use a flow rate adjusting valve which can adjust a flow rate by adjusting a valve-opening degree.

The refrigerant circuit 2 is provided with a plurality of sensors for detecting a state of refrigerant which flows through the refrigerant circuit. The refrigerant pipe between the compressor 21 and the four-way valve 26 is provided with a first pressure sensor 51 for detecting pressure (discharge pressure) of refrigerant discharged from the compressor 21. The refrigerant pipe between the expansion valve 23 and the evaporator 24 is provided with a first temperature sensor 61 for detecting temperature of refrigerant. The refrigerant pipe between the evaporator 24 and the four-way valve 26 is provided with a second temperature sensor 62 for detecting temperature of refrigerant. A third temperature sensor 63 for detecting ambient temperature (outside air temperature) around the hot water generator 1A is provided in the hot water generator 1A. The third temperature sensor 63 can detect temperature of air which flows into the evaporator 24 by blast means 27. When the evaporator 24 is placed outdoors, the third temperature sensor 63 is placed at a position capable of detecting outdoor outside air temperature.

The heating medium circuit 7 is configured by annularly connecting a heating medium flow path of the radiator 22, the pump 71, and a utilizing-side radiator 72 such as a heating terminal through a heating medium pipe. Water heated by the radiator 22 dissipates heat in the utilizing-side radiator 72, thereby heating a room. A heat exchanger for supplying hot water may be employed as the utilizing-side radiator 72 rather than the heating terminal. According to this, if liquid which circulates through the heating medium circuit 7 and water flowing from a water pipe are made to exchange heat in the heat exchanger which is for supplying hot water, and hot water to be supplied can be produced.

The heating medium circuit 7 includes a fourth temperature sensor 64 for detecting temperature of water which circulates through the heating medium circuit 7. The fourth temperature sensor 64 is provided in the heating medium pipe at a location downstream of the radiator 22 with respect to the circulation direction of water in the heating medium circuit 7, i.e., in the heating medium pipe on the outlet side of the radiator 22. According to this, the fourth temperature sensor 64 can detect temperature of water heated by the radiator 22.

The control device 4 includes a CPU and a memory. The control device 4 controls the operation frequency of the compressor 21, the switching operation of the circulation direction of refrigerant executed by the four-way valve 26, a valve-opening degree of the expansion valve 23, the number of rotations of the blast means 27, opening and closing operations of the two-way valve 31, and the number of rotations of the pump 71 based on detection values detected by the first pressure sensor 51, the first temperature sensor 61, the second temperature sensor 62, the third temperature sensor 63 and the fourth temperature sensor 64, and controls.

The control device 4 includes: a receiving unit (not shown) for receiving signals of the detection signals of the first pressure sensor 51, the first temperature sensor 61, the second temperature sensor 62, the third temperature sensor 63 and the fourth temperature sensor 64; an operation mode determining unit (not shown) for determining operation modes to be executed based on the detection values of the sensors 51 and 61 to 64 received by the receiving unit; a compressor controller (not shown) for performing control in accordance with information of the operation mode determined by the operation mode determining unit; a flow path switching controller (not shown) ; a decompressor controller (not shown) ; a blast means controller (not shown); an opening and closing device controller (not shown) ; and a pump controller (not shown). These controllers perform control based on operation mode information, and receive information of an operation state of a member to be controlled.

A plurality of operation modes are stored in the operation mode determining unit. The control device 4 selectively executes any of the plurality of operation modes, and controls when one of the operation modes is shifted to another operation mode.

As shown in Fig. 1, the hot water generator 1A of this embodiment is configured such that the refrigeration cycle having the refrigerant circuit 2 and the bypass passage 3, the pump 71 configuring the heating medium circuit 7, the control device 4, the outdoor fan 27, and the various kinds of sensors 51 and 61 to 64 are accommodated in one casing.

A heat pump unit in which constituent elements of the refrigeration cycle other than the radiator 22 are accommodated and a heating medium unit in which the radiator 22 and the pump 71 are accommodated may separately be configured.

Next, operation action executed by the hot water generator 1A of this embodiment will be described. The hot water generator 1A can execute at least the heating operation (third operation mode) for producing hot water by the radiator 22, and the defrosting operation (first operation mode, second operation mode) for removing frost adhered to a surface of the evaporator 24 during the heating operation. These operations will be described below.

In the heating operation (third operation mode) for producing hot water by the radiator 22, the control device 4 brings the opening and closing device 31 into its closed state, and switches the four-way valve 26 so that refrigerant discharged from the compressor 21 flows into the radiator 22, i.e., switches the four-way valve 26 so that the refrigerant circulates in the direction of the normal cycle.

During the heating operation, in the refrigerant circuit 2, high temperature and high pressure gas phase refrigerant discharged from the compressor 21 flows into the refrigerant flow path of the radiator 22 through the four-way valve 26. In the heating medium circuit 7, water conveyed by the pump 71 flows into the heating medium flow path of the radiator 22. According to this, heat is exchanged between refrigerant and water in the radiator 22, and refrigerant dissipates heat to water, thereby producing hot water. A portion or all of refrigerant which dissipates heat to water condenses and is brought into a gas-liquid two phase state or a liquid phase state.

High pressure refrigerant which flows out from the radiator 22 is decompressed by the expansion valve 23 and expands, and flows into the evaporator 24. The low pressure refrigerant which flows into the evaporator 24 exchanges heat with air sent by the blast means 27, and the refrigerant absorbs heat from the air and evaporates. The low pressure refrigerant which flows out from the evaporator 24 is again sucked into the compressor 21. This operation is repeated and hot water is sequentially produced in the radiator 22.

The hot water which flows out from the radiator 22 flows through the heating medium circuit 7 and flows into the utilizing-side radiator 72. When the utilizing-side radiator 72 is a heating terminal, hot water dissipates heat in the utilizing-side radiator 72, and a room is heated.

In the heating operation, the control device 4 adjusts temperature of refrigerant which flows into the radiator 22 such that a detection value of the fourth temperature sensor 64 becomes equal to a predetermined target temperature, controls the number of rotations of the pump 71 and adjusts a flow rate of water which flows into the radiator 22.

If the heating operation for producing hot water in the radiator 22 is executed, extremely low temperature refrigerant flows into the evaporator 24. According to this, moisture in air which exchanges heat with refrigerant in the evaporator 24 condenses around the evaporator 24 and the moisture adheres to a surface of the evaporator 24. According to this, heat transfer performance of the evaporator 24 is deteriorated. As a result, heating ability of the radiator 22 is deteriorated, and coefficient of performance of the refrigeration cycle is lowered. Therefore, when the heating operation is carried out, it is necessary to determine an amount of frost which adheres to the evaporator 24 from operation time and outside air temperature which is detected by the third temperature sensor 63, and to execute the defrosting operation for melting frost which adheres to the evaporator 24.

The hot water generator 1A of the present invention carries out the reversed cycle defrosting operation (first operation mode) which is carried out by switching the four-way valve 26 such that refrigerant circulates in the direction of the reversed cycle, and the normal cycle defrosting operation (second operation mode) which is carried out by switching the four-way valve 26 such that refrigerant circulates in the direction of the normal cycle and by opening the opening and closing device 31. The switching between the first operation mode and the second operation mode is carried out based on temperature of water flowing through the radiator 22. Operations in the first operation mode and the second operation mode will sequentially be described below.

A condition (defrosting condition) in which frost adheres to the evaporator 24 and the defrosting operation becomes necessary is established, the control device 4 shifts the operation mode from the heating operation to the reversed cycle defrosting operation (first operation mode). The defrosting condition will be described later.

In the reversed cycle defrosting operation (first operation mode), the control device 4 switches the four-way valve 26 so that refrigerant circulates in the direction of the reversed cycle, and brings the opening and closing device 31 into its closed state. Further, the control device 4 stop generating power toward the outdoor fan 27 to stop the outdoor fan 27, and operates the compressor 21 while controlling the opening degree of the expansion valve 23. At this time, it is preferable that the pump 71 is operated. According to this, since refrigerant circulates through the refrigerant circuit 2 and water circulates through the heating medium circuit 7, the refrigerant can absorb heat from the water in the radiator 22, the defrosting time can be shortened.

In the reversed cycle defrosting operation (first operation mode), high temperature and high pressure gas phase refrigerant discharged from the compressor 21 flows into the evaporator 24 through the four-way valve 26, dissipates heat to frost which adheres to the evaporator 24, and melts the frost. A portion or all of the refrigerant which dissipates heat in the evaporator 24 condenses, and becomes a gas-liquid two phase state or a liquid phase state. The refrigerant which flows out from the evaporator 24 flows through the expansion valve 23 and flows into the radiator 22. In the heating medium circuit 7, water which is conveyed by the pump 71 flows into the radiator 22. The refrigerant which flows into the radiator 22 absorbs heat from water flowing through the radiator 22 in the radiator 22 and then, the refrigerant is again sucked into the compressor 21 through the four-way valve 26 and the accumulator 25. By repeating this operation, the frost which adheres to the evaporator 24 is melted.

Here, in the reversed cycle defrosting operation (first operation mode), low temperature refrigerant flows into the radiator 22 unlike the heating operation. Temperature of refrigerant which flows into the radiator 22 becomes lower than 0° in many cases. Hence, if the reversed cycle defrosting operation (first operation mode) is executed for given time, temperature of water flowing through the radiator 22 is lowered and the water freezes in some cases. In the case of liquid such as water and antifreeze liquid, if it freezes, its volume expands. Therefore, if liquid freezes in the radiator 22, the volume of the liquid expands and the liquid damages the radiator 22 in some cases.

Hence, in the conventional technique, an auxiliary flow path which connects an upstream side and a downstream side of the radiator to each other is provided, and when it is determined that there is a possibility that water freezes in the radiator during the reversed cycle defrosting operation (first operation mode), a portion or all of the refrigerant is made to flow to the auxiliary flow path, thereby preventing water in the radiator from freezing.

However, when only a portion of refrigerant is made to flow to the auxiliary flow path, since no small low temperature refrigerant flows into the radiator, it is not possible to prevent water in the radiator from freezing.

When a portion of refrigerant is made to flow to the auxiliary flow path, a quantity of heat of water absorbed by refrigerant flowing through the radiator is reduced. Further, when all of refrigerant is made to flow to the auxiliary flow path, refrigerant flowing through the radiator can not absorb heat from water at all.

Hence, a large amount of refrigerant returns to the compressor while keeping its liquid phase state. Therefore, a degree of superheat of discharged refrigerant of the compressor is lowered and suction pressure of the compressor is lowered. Thus, time required for defrosting the evaporator becomes long. Further, during the reversed cycle defrosting operation (first operation mode), water flowing through the heating medium circuit dissipates heat to refrigerant and temperature of the water is lowered. Therefore, if the reversed cycle defrosting operation (first operation mode) is executed for a long time, temperature of water flowing into the utilizing-side heat exchanger is lowered. Especially when the utilizing-side heat exchanger is a heating terminal, comfort of a user is deteriorated.

In addition, if a large amount of liquid phase refrigerant returns to the compressor, since lubricating oil in the compressor is diluted, the interior of the compressor can not sufficiently be lubricated and the compressor is damaged in some cases.

Hence, in the hot water generator 1A of the embodiment, to solve the problems caused by the reversed cycle defrosting operation (first operation mode), the normal cycle defrosting operation (second operation mode) is executed in addition to the reversed cycle defrosting operation (first operation mode) . The normal cycle defrosting operation (second operation mode) can defrost the evaporator 24 while suppressing reduction in temperature of water flowing through the radiator 22.

When a condition (freezing condition) in which there is a possibility that water freezes in the radiator 22 is established during the reversed cycle defrosting operation (first operation mode), the control device 4 shifts the reversed cycle defrosting operation (first operation mode) to the normal cycle defrosting operation (second operation mode).

An operation of the hot water generator 1A when the first operation mode is shifted to the second operation mode, and an operation of the hot water generator 1A in the normal cycle defrosting operation (second operation mode) will be described below.

When the freezing condition is established, the control device 4 shifts the reversed cycle defrosting operation (first operation mode) to the normal cycle defrosting operation (second operation mode). Here, a case where the freezing condition is established is a case where temperature of the radiator 22 becomes equal to or lower than predetermined temperature. The temperature of the radiator 22 is detected by first heat exchanger temperature detecting means. The first heat exchanger temperature detecting means directly or indirectly detects the temperature of the radiator 22.

In this embodiment, the fourth temperature sensor 64 functions as the first heat exchanger temperature detecting means. When the temperature detected by the fourth temperature sensor 64 becomes equal to or lower than the predetermined temperature during the reversed cycle defrosting operation (first operation mode), the control device 4 determines that there is a possibility that water in the radiator 22 freezes, and the control device 4 shifts the operation mode to the normal cycle defrosting operation (second operation mode).

During the reversed cycle defrosting operation (first operation mode), the circulation direction of the refrigerant is brought into the normal cycle direction by the four-way valve 26 before water actually freezes in the radiator 22, and high temperature and high pressure discharged refrigerant flows into the radiator 22. Therefore, temperature of water is not further lowered in the radiator 22. Hence, it is possible to avoid a case where water flowing through the radiator 22 freezes and the radiator 22 is damaged.

Temperature of the radiator 22 can also be detected by another means other than the fourth temperature sensor 64. That is, the radiator 22 may be provided with a temperature sensor to directly detect the temperature of the radiator 22. It is also possible to employ such a configuration that the upstream side heating medium pipe of the radiator 22 is provided with a temperature sensor to detect temperature of water which flows into the radiator 22, and a possibility that water freezes is determined based on a difference between temperature of water flowing into the radiator 22 and temperature of water flowing out from the radiator 22. It is also possible to estimate temperature of the radiator 22 by detecting temperature of refrigerant flowing into the radiator 22 or by detecting temperature of refrigerant flowing out from the radiator 22. As described above, it is possible to directly detect the temperature of the radiator 22, and to indirectly detect the temperature of the radiator 22 by detecting at least one of temperatures of refrigerant and water flowing into or flowing out from the radiator 22.

Here, the fourth temperature sensor 64 is necessary to control temperature of hot water produced by the radiator 22 at the time of the heating operation. Therefore, if the fourth temperature sensor 64 is used as the first heat exchanger temperature detecting means as in this embodiment, it is possible to commoditize parts.

If the freezing condition is established during the reversed cycle defrosting operation (first operation mode), the control device 4 starts shifting the operation mode to the normal cycle defrosting operation (second operation mode). When the reversed cycle defrosting operation (first operation mode) is shifted to the normal cycle defrosting operation (second operation mode), the control device 4 carries out, in the following order, the operation for switching the circulation direction executed by the four-way valve 26 and the operation for changing the opening and closing device 31 from its closed state to its opened state. When the control device 4 switches the four-way valve 26 into the normal cycle, the control device 4 drives the outdoor fan 27 at the same time, and eliminates output toward the pump 71 to stop the pump 71. The operation of the outdoor fan 27 may be started between the switching operation of the circulation direction executed by the four-way valve 26 and the changing operation of the opening and closing device 31. The operation of the pump 71 may be stopped between the switching operation of the circulation direction executed by the four-way valve 26 and the changing operation of the opening and closing device 31.

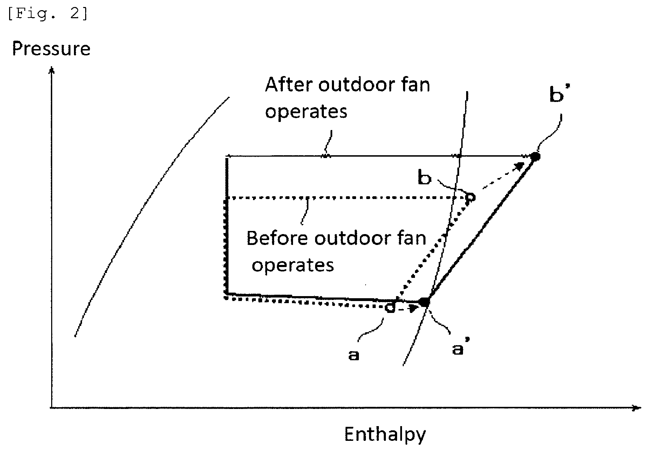

If the circulation direction is switched to the normal cycle by the four-way valve 2 6 and the outdoor fan 27 is operated, refrigerant absorbs heat from air in the evaporator 24. According to this, pressure and enthalpy of refrigerant sucked into the compressor 21 increase from point a to point a' as shown in Fig. 2. Further, pressure and enthalpy of discharged refrigerant of the compressor 21 increase from point b to point b'. Hence, since high temperature and high pressure discharged refrigerant flows into the radiator 22, the radiator 22 whose temperature becomes low during the reversed cycle defrosting operation (first operation mode) and water flowing through the radiator 22 are swiftly heated. As a result, it is possible to prevent water in the radiator 22 from freezing, and it is possible to suppress the reduction in temperature of water flowing into the utilizing-side radiator 72 and to enhance comfort of a user.

After the switching operation of the circulation direction is executed by the four-way valve 26 and the outdoor fan 27 is driven, if discharge pressure detected by the first pressure sensor 51 rises up to predetermined pressure, the control device 4 operates the opening and closing device 31 from its closed state to its opened state. According to this, the shifting operation from the reversed cycle defrosting operation (first operation mode) to the normal cycle defrosting operation (second operation mode) is completed. To operate the opening and closing device 31 and to stop the outdoor fan 27, the control device 4 eliminates output toward the outdoor fan 27.

In the normal cycle defrosting operation (second operation mode), the control device 4 makes an opening degree of the expansion valve 23 smaller than that of the expansion valve 23 during the reversed cycle defrosting operation (first operation mode), and operates the compressor 21. At this time, it is preferable that the pump 71 is stopped.

In the normal cycle defrosting operation (second operation mode), the two-way valve 31 is brought into its opened state and thus, refrigerant flows from a high-pressure side refrigerant pipe to a low-pressure side refrigerant pipe through the bypass passage 3. That is, refrigerant bypasses utilizing the bypass passage 3. In the hot water generator 1A of the embodiment, as shown in Fig. 1, discharged refrigerant from the compressor 21 flows into the bypass passage 3 from the refrigerant pipe between a discharge side of the compressor 21 and the four-way valve 26, and the discharged refrigerant merges with refrigerant which flows through the refrigerant circuit 2 in the refrigerant pipe between the four-way valve 26 and the accumulator 25. That is, a short circuit in which a portion of the discharged refrigerant circulates between a discharge side refrigerant pipe of the compressor 21 and a suction side refrigerant pipe of the compressor 21 is generated.

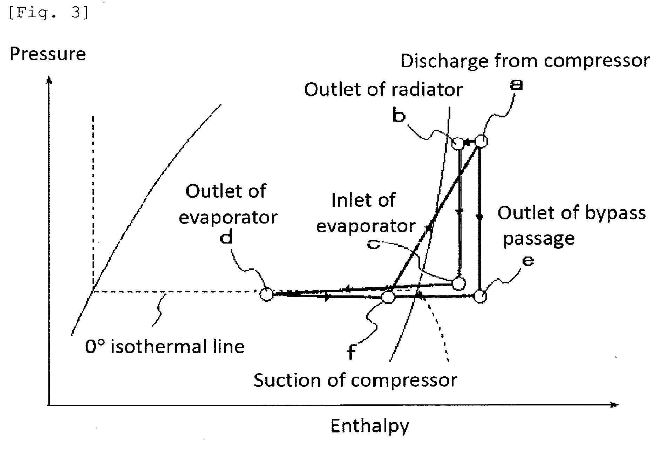

Next, using a Mollier diagram shown in Fig. 3, an operation of the hot water generator 1A in the normal cycle defrosting operation (second operation mode) will be described.

As shown in Fig. 3, refrigerant (point a) discharged from the compressor 21 is divided into the refrigerant pipe connected to the four-way valve 26 and the bypass passage 3. Refrigerant which flows into the refrigerant pipe connected to the four-way valve 26 flows through the four-way valve 26 and flows into the radiator 22. Here, the radiator 22 and water in the radiator 22 are heated when the reversed cycle defrosting operation (first operation mode) is shifted to the normal cycle defrosting operation (second operation mode). Hence, in the radiator 22, heat radiation from refrigerant to the radiator 22 and water in the radiator 22 is suppressed. As a result, refrigerant flows out from the radiator 22 while keeping its high enthalpy as shown by point b in Fig. 3. Further, since a portion of the gas phase discharged refrigerant bypasses through the bypass passage 3, a flow rate of the refrigerant flowing through the radiator 22 is reduced as compared with a case where the bypass passage 3 is in the closed state. According to this, pressure loss of refrigerant flowing through the refrigerant circuit 2 is reduced, and refrigerant pressure of the evaporator 24 rises. Hence, it is possible to increase a difference between temperature of refrigerant flowing into the evaporator 24 and temperature of a melting point (about 0°) of frost as shown by point c in Fig. 3. Enthalpy of the refrigerant which dissipates heat in the evaporator 24 is reduced, the refrigerant is brought into the gas-liquid two phase state until the refrigerant flows out from the evaporator 24, and the refrigerant flows out from the evaporator 24 (point d).

That is, when the reversed cycle defrosting operation (first operation mode) is shifted to the normal cycle defrosting operation (second operation mode), the circulation direction is switched to the direction of the normal cycle by the four-way valve 26, the outdoor fan 27 is operated and after the discharge pressure becomes equal to the predetermined pressure, the bypass passage 3 is opened. As a result, temperature of refrigerant which flows into the evaporator 24 rises, the defrosting time is shortened, water in the heating medium circuit 7 is heated, and reduction in temperature of water in the utilizing-side radiator 72 is suppressed.

Refrigerant which is made to bypass by the bypass passage 3 expands while the refrigerant flows through the bypass passage 3, enthalpy of the refrigerant is high as shown by point e in Fig. 3, and the refrigerant flows into the suction side refrigerant pipe (low-pressure side refrigerant pipe) of the compressor 21 in its superheat state. In a connected portion between the low-pressure side refrigerant pipe and the other end of the bypass passage 3, gas-liquid two phase refrigerant which flows out from the evaporator 24 and refrigerant which flows through the bypass passage 3 are mixed, and enthalpy of the refrigerant increases from point d to point f shown in Fig. 3. Hence, it is possible to restrain a large amount of liquid refrigerant from flowing into the compressor 21.

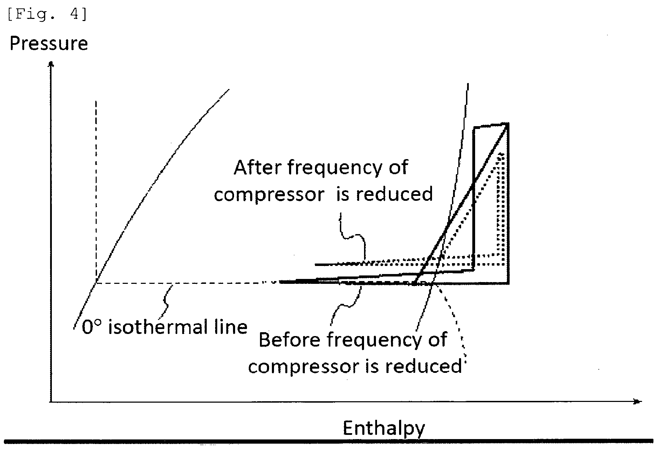

If it is determined that frost which adhered to the evaporator 24 is melted in the normal cycle defrosting operation (second operation mode) (completion condition), the control device 4 lowers operation frequency of the compressor 21 before the operation mode is shifted to the heating operation. The completion condition will be described later. According to this, the refrigeration cycle during the normal cycle defrosting operation (second operation mode) is varied from a state shown by a solid line to a state shown by a dotted line in Fig. 4. That is, discharge pressure is lowered and suction pressure rises. Hence, since temperature of refrigerant flowing through the evaporator 24 rises, even if a portion of frost which adheres to the evaporator 24 does not melt and remains for any reason, it is possible to further melt frost.

If the operation frequency is lowered, a difference between high-pressure side pressure and low-pressure side pressure of the refrigeration cycle is reduced. Hence, when the operation mode is switched from the normal cycle defrosting operation (second operation mode) to the heating operation, it is unnecessary to operate the two-way valve 31 under a condition where an excessive pressure difference is generated, and it is possible to prevent the two-way valve 31 from being damaged.

After the control device 4 lowers the operation frequency of the compressor 21, the control device 4 operates the two-way valve 31 from the opened state to the closed state, and completes the shifting operation from the normal cycle defrosting operation (second operation mode) to the heating operation. The control device 4 opens and closes the two-way valve 31 and at the same time, drives the outdoor fan 27 and the pump 71. As a result, operation frequency of the compressor 21 when the normal cycle defrosting operation (second operation mode) is shifted to the heating operation becomes lower than the maximum frequency in the normal cycle defrosting operation (second operation mode).

Control flow in the defrosting operation will be described below. The refrigerant circuit 2 is provided with the first pressure sensor 51 for detecting pressure (discharge pressure) Pd of refrigerant discharged from the compressor 21, the first temperature sensor 61 for detecting temperature (inflowing refrigerant temperature) Tei of refrigerant flowing into the evaporator 24 in the heating operation and the normal cycle defrosting operation (second operation mode), and the second temperature sensor 62 for detecting temperature (outflowing refrigerant temperature) Teo of refrigerant flowing out from the evaporator 24 in the heating operation and the normal cycle defrosting operation (second operation mode). The hot water generator 1A is provided with the third temperature sensor 63 for detecting outside air temperature (outside air temperature) Tao. The heating medium circuit 7 is provided with the fourth temperature sensor 64 for detecting temperature (outflowing water temperature) Two of water flowing out from the radiator 22.

The control device 4 controls the operation frequency of the compressor 21, the number of rotations of the outdoor fan 27, the switching operation of the circulation direction of refrigerant executed by the four-way valve 26, the valve-opening degree of the expansion valve 23, and the opening and closing operation of the two-way valve 31 based on detection values detected by the various kinds of sensors 51, 61, 62, 63 and 64.

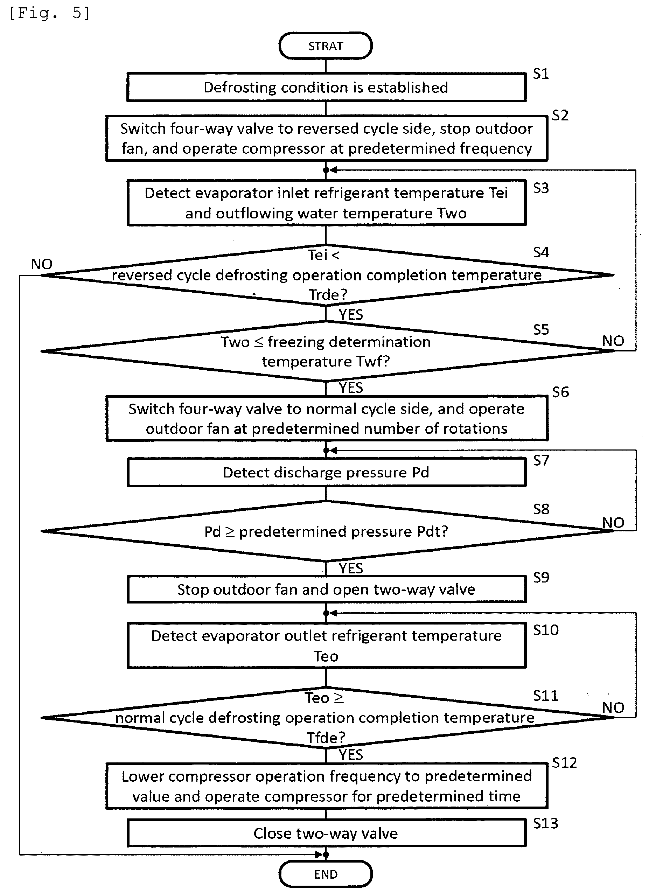

Next, control flow of the defrosting operation will be described in detail with reference to the flowchart shown in Fig. 5.

First, the control device 4 determines whether the defrosting condition is established. The defrosting condition is determined based on the inflowing refrigerant temperature Tei detected by the first temperature sensor 61 during the heating operation, the outside air temperature Tao detected by the third temperature sensor 63, and time elapsed until the heating operation is executed after the last time defrosting operation is completed. As the inflowing refrigerant temperature Tei and the outside air temperature Tao are lower, and as the execution time of the heating operation is shorter, it becomes easier to establish the defrosting condition. If the defrosting condition is established (step S1), the shifting operation to the reversed cycle defrosting operation (first operation mode) is started.

In the reversed cycle defrosting operation (first operation mode), the control device 4 switches the circulation direction of refrigerant to the direction of the reversed cycle by the four-way valve 26 and stops the outdoor fan 27, and operates the compressor 21 at a predetermined frequency (step S2).

Next, the first temperature sensor 61 detects inflowing refrigerant temperature Tei, and the fourth temperature sensor 64 detects outflowing water temperature Two (step S3).

Next, the control device 4 determines whether the completion condition of the defrosting operation is established (step S4). More specifically, the inflowing water temperature Tei detected by the first temperature sensor 61 and temperature (first operation completion temperature) Trde which becomes a threshold value for completing the reversed cycle defrosting operation (first operation mode) are compared with each other. When the inflowing water temperature Tei is equal to or higher than the first operation completion temperature Trde (NO in step S4), frost is melted, it is determined that the completion condition of the defrosting operation is established, and the defrosting operation is completed. In this case, the four-way valve 26 is switched to the direction of the normal cycle, and the procedure is shifted to the heating operation (third operation mode). The first operation completion temperature Trde varies in accordance with outside air temperature Tao detected by the third temperature sensor 63.

On the other hand, if the inflowing refrigerant temperature Tei is lower than the first operation completion temperature Trde (YES in step S4), it is determined that frost which adhered to the evaporator 24 remains, the reversed cycle defrosting operation is continued.

Thereafter, the control device 4 determines whether the freezing condition is established. More specifically, the outflowing water temperature Two detected by the fourth temperature sensor 64 and preset freezing determination temperature Twf are compared with each other, and it is determined whether water flowing through the radiator 22 freezes (step S5). If the outflowing water temperature Two is higher than the freezing determination temperature Twf (NO in step S5), it is determined that water does not freeze, the procedure returns to step S3, and the reversed cycle defrosting operation (first operation mode) is continued.

If the outflowing water temperature Two is equal to or lower than the freezing determination temperature Twf (YES in step S5), it is determined that there is a possibility that water flowing through the heating medium circuit 7 freezes (freezing condition is established), the shifting operation to the normal cycle defrosting operation (second operation mode) is started. That is, the control device 4 switches the circulation direction of refrigerant to the direction of the normal cycle by the four-way valve 26, and operates the outdoor fan 27 with the predetermined number of rotations (step S6).

The freezing determination temperature Twf is previously derived experimentally, and temperature at which water flowing through the radiator 22 does not freeze may be set as the freezing determination temperature Twf. If the freezing determination temperature Twf is set as a function of the outside air temperature Tao like the Twf = f(Tao), it is possible to take the temperature influence of refrigerant which flows into the radiator 22 into account, and it is possible to more reliably prevent water from freezing in the radiator 22.

In step S6, the smaller a flow rate of water flowing through the heating medium circuit 7 is, the shorter the defrosting time can become. For this purpose, it is effective to reduce the number of rotations of the pump 71 and to intermittently operate the pump 71. The heating medium circuit 7 may be provided with an on-off valve, and a flow path resistor may be provided.

Next, discharge pressure Pd is detected by the first pressure sensor 51 (step S7), and the detected discharge pressure Pd and preset predetermined pressure Pdt are compared with each other. According to this, it is determined whether temperature of the radiator 22 and temperature of water in the radiator 22 sufficiently rise (step S8).

If the discharge pressure Pd is lower than the predetermined pressure Pdt (NO in step S8), it is determined that the radiator 22 and water in the radiator 22 are not sufficiently heated, and the procedure returns to step S7.

On the other hand, if the discharge pressure Pd is equal to or higher than the predetermined pressure Pdt (YES in step S8), it is determined that the temperature of the radiator 22 and the temperature of water in the radiator 22 sufficiently rise, the outdoor fan 27 is stopped, the two-way valve 31 is opened (step S9), and the normal cycle defrosting operation (second operation mode) is started.

Here, although the discharge pressure Pd is used for determining whether the procedure should be shifted to the normal cycle defrosting operation (step S9), the present invention is not limited to this. For example, temperature of water in the heating medium circuit 7 may be used. In this case, the outflowing water temperature Two detected by the fourth temperature sensor 64 and a preset threshold value may be compared with each other. Alternatively, operation time of the outdoor fan 27 may be used. In this case, when the operation time of the outdoor fan 27 exceeds predetermined time, the two-way valve 31 is opened and the procedure should be shifted to the normal cycle defrosting operation (second operation mode).

Next, the control device 4 detects outflowing refrigerant temperature Teo by the second temperature sensor 62 (step S10).

The outflowing refrigerant temperature Teo and temperature (second operation completion temperature) Tfde for completing preset normal cycle defrosting operation (second operation mode) are compared with each other, and it is determined whether the completion condition is established (step S11). The second operation completion temperature Tfde varies in accordance with the outside air temperature Tao detected by the third temperature sensor 63.

If the outflowing refrigerant temperature Teo is lower than the second operation completion temperature Tfde (NO in step S11), it is determined that frost remains on the evaporator 24, and the normal cycle defrosting operation (second operation mode) is continued.

When evaporator outlet temperature Teo is equal to or higher than the second operation completion temperature Tfde (YES in step S11), it is determined that frost is melted, and the compressor 21 is operated for predetermined time in a state where operation frequency of the compressor 21 is lowered (step S12). Thereafter, the two-way valve 31 is closed (step S13), and the defrosting operation is completed. Then, the heating operation is again started.

The operation frequency of the compressor 21 may be lowered in a stepwise fashion. In this case, until the normal cycle defrosting operation (second operation mode) is completed, the compressor 21 should be operated such that the operation frequency of the compressor 21 is lowered in the stepwise fashion as the outflowing refrigerant temperature Teo becomes higher.

As described above, the hot water generator 1A includes the refrigeration cycle having the refrigerant circuit 2 and the bypass passage 3, the one end of the bypass passage 3 is connected to the high-pressure side refrigerant pipe of the refrigerant circuit 2, and the other end of the bypass passage 3 is connected to the low-pressure side refrigerant pipe or the compression chamber of the compressor 21. According to this, it is possible to restrain temperature of water flowing through the radiator 22 from becoming lower than the freezing temperature of water during the defrosting operation, since the evaporator 24 can be defrosted using the reversed cycle defrosting operation (first operation mode) and the normal cycle defrosting operation (second operation mode). Therefore, it is possible to prevent the radiator 22 from being damaged by volume expansion caused by freezing of water, and reliability of the hot water generator 1A as a device is enhanced.

By the normal cycle defrosting operation (second operation mode), temperature of refrigerant flowing into the evaporator 24 can rise, the defrosting time is shortened, water flowing through the heating medium circuit 7 is heated, reduction in temperature of water flowing through the utilizing-side radiator 72 is suppressed, and comfort of user can highly be maintained. By returning the gas phase refrigerant to the compressor 21 through the bypass passage 3, it is possible to restrain a large amount of liquid phase refrigerant from flowing into the compressor 21. Hence, it is possible to prevent lubricating oil from being diluted by liquid phase refrigerant, and to enhance the reliability of the compressor 21.

If the outflowing refrigerant temperature Teo detected by the second temperature sensor 62 becomes equal to or higher than the predetermined temperature during the normal cycle defrosting operation (second operation mode), the operation frequency of the compressor 21 is lowered before the shifting operation to the heating operation is completed. According to this, suction pressure of the compressor 21 rises, temperature of refrigerant in the evaporator 24 rises and frost remaining on the surface of the evaporator 24 is melted. If the operation frequency of the compressor 21 is lowered, since a difference between high-pressure side pressure and low-pressure side pressure in the refrigeration cycle becomes small, the two-way valve 31 is not operated under an environment that an excessive pressure difference is generated, and reliability of the two-way valve 31 is enhanced.

Although the discharge pressure Pd is detected by the first pressure sensor 51 in this embodiment, the discharge pressure Pd may be detected by another means other than the first pressure sensor 51. For example, a temperature sensor for detecting temperature of gas-liquid two phase refrigerant flowing through the radiator 22 may be provided, saturated pressure may be calculated from the temperature detected by the temperature sensor and the calculated value may be used as the discharge pressure Pd.

### [INDUSTRIAL APPLICABILITY]

The present invention is especially useful as a hot water generator which produces hot water by a refrigeration cycle device, and utilizes the hot water for heating a room or supplying the hot water.

### [EXPLANATION OF SYMBOLS]

- 1A: hot water generator
- 2: refrigerant circuit
- 3: bypass passage
- 4: control device
- 21: compressor
- 22: radiator (first heat exchanger)
- 23: expansion valve (decompressor)
- 24: evaporator (second heat exchanger)
- 26: four-way valve (flow path switching means)
- 27: outdoor fan (blast means)
- 31: two-way valve (opening and closing device)

## Claims

1. A hot water generator comprising:
a refrigerant circuit (2) formed by annularly connecting, through a refrigerant pipe to one another, a compressor (21) for compressing refrigerant, flow path switching means (26) for switching flowing directions of the refrigerant, a first heat exchanger (22) for exchanging heat between the refrigerant and liquid, a decompressor (23) for decompressing the refrigerant, and a second heat exchanger (24) for exchanging heat between the refrigerant and air;
a bypass passage (3),
an opening and closing device for opening and closing the bypass passage; and
a control device (4) for executing a plurality of operation modes, **characterized in that** the bypass passage is for connecting the refrigerant pipe between a discharge side of the compressor (21) and the first heat exchanger (22) to the refrigerant pipe between the decompressor (23) and a suction side of the compressor (21), or to a compression chamber of the compressor, and **in that** the control device (4) is for executing the following operation modes:
a first operation mode for making the refrigerant discharged from the compressor (21) flow into the second heat exchanger (24) through the flow path switching means (26), and for closing the opening and closing device (31), and
a second operation mode for making the refrigerant discharged from the compressor (21) flow into the first heat exchanger (22) through the flow path switching means (26), and for opening the opening and closing device, and wherein
the control device (4) is configured to shift the operation mode to the second operation mode, when temperature of the first heat exchanger becomes lower than predetermined temperature during the first operation mode.

2. The hot water generator according to claim 1, wherein the control device (4) is configured to operate the opening and closing device (31) after the control device (4) operates the flow path switching means (26), when the first operation mode is shifted to the second operation mode.

3. The hot water generator according to claim 1 or 2, wherein the plurality of operation modes include a third operation mode for making the refrigerant discharged from the compressor (21) flow into the first heat exchanger (22) through the flow path switching means (26), and for closing the opening and closing device (31), and
the control device (4) is configured to operate the compressor (21) such that operation frequency of the compressor when the third operation mode starts becomes smaller than a maximum value of operation frequency of the compressor during the second operation mode.

## Patentansprüche

1. Heißwassererzeuger, enthaltend:
einen Kühlkreislauf (2), der durch einen Kompressor (21) zum Verdichten eines Kühlmittels, Strömungsweg-Schaltmittel (26) zum Umschalten der Fließrichtungen des Kühlmittels, einen ersten Wärmetauscher (22) zum Wärmeaustausch zwischen dem Kühlmittel und einer Flüssigkeit, eine Dekompressionseinrichtung (23) zum Entspannen des Kühlmittels und einen zweiten Wärmetauscher (24) zum Wärmeaustausch zwischen dem Kühlmittel und Luft mittels ringförmiges Verbinden über eine Kühlleitung miteinander gebildet ist;
einen Bypasskanal (3),
eine Öffnungs- und Schließeinrichtung zum Öffnen und Schließen des Bypasskanals; und
eine Steuereinrichtung (4) zum Ausführen einer Vielzahl von Betriebsmodi, **dadurch gekennzeichnet, dass** der Bypasskanal vorgesehen ist zum Verbinden der Kühlleitung zwischen einer Austragsseite des Kompressors (21) und dem ersten Wärmetauscher (22) mit der Kühlleitung zwischen der Dekompressionseinrichtung (23) und einer Ansaugseite des Kompressors (21), oder mit einer Kompressionskammer des Kompressors, und dass die Steuereinrichtung (4) zum Ausführen der folgenden Betriebsmodi vorgesehen ist:
einen ersten Betriebsmodus, um das aus dem Kompressor (21) ausgetragene Kühlmittel über die Strömungsweg-Schaltmittel (26) in den zweiten Wärmetauscher (24) fließen zu lassen, und um die Öffnungs- und Schließeinrichtung (31) zu schließen, und
einen zweiten Betriebsmodus, um das aus dem Kompressor (21) ausgetragene Kühlmittel über die Strömungsweg-Schaltmittel (26) in den ersten Wärmetauscher (22) fließen zu lassen, und um die Öffnungs- und Schließeinrichtung (31) zu öffnen, und
wobei die Steuereinrichtung (4) ausgebildet ist, den Betriebsmodus zu dem zweiten Betriebsmodus zu verlagern, wenn die Temperatur des ersten Wärmetauschers kleiner wird als eine vorbestimmte Temperatur während des ersten Betriebsmodus.

2. Heißwassererzeuger nach Anspruch 1,
wobei die Steuereinrichtung (4) ausgebildet ist, die Öffnungs- und Schließeinrichtung (31) zu betreiben, nachdem die Steuereinrichtung (4) die Strömungsweg-Schaltmittel (26) betätigt hat, wenn der erste Betriebsmodus zu dem zweiten Betriebsmodus verlagert wird.

3. Heißwassererzeuger nach Anspruch 1 oder 2,
wobei die Vielzahl von Betriebsmodi einen dritten Betriebsmodus enthalten, um das aus dem Kompressor (21) ausgetragene Kühlmittel über die Strömungsweg-Schaltmittel (26) in den ersten Wärmetauscher (22) fließen zu lassen und um die Öffnungs- und Schließeinrichtung (31) zu schließen, und wobei die Steuereinrichtung (4) ausgebildet ist, den Kompressor (21) in der Weise zu betreiben, dass die Betriebsfrequenz des Kompressors kleiner wird als ein Maximalwert der Betriebsfrequenz des Kompressors während des zweiten Betriebsmodus, wenn der dritte Betriebsmodus beginnt.

## Revendications

1. Générateur d'eau chaude, comprenant:
un circuit frigorifique (2) qui est formé en reliant de façon annulaire entre eux, par l'intermédiaire d'un tuyau frigorifique, un compresseur (21) destiné à comprimer un réfrigérant, des moyens de commutation de trajet d'écoulement (26) destinés à commuter les directions d'écoulement du réfrigérant, un premier échangeur de chaleur (22) destiné à échanger de la chaleur entre le réfrigérant et un liquide, un dispositif de décompression (23) destiné à décomprimer le réfrigérant ainsi qu'un deuxième échangeur de chaleur (24) destiné à échanger de la chaleur entre le réfrigérant et l'air;
un canal de dérivation (3),
un dispositif d'ouverture et de fermeture destiné à ouvrir et à fermer ledit canal de dérivation; et
un dispositif de commande (4) destiné à effectuer une pluralité de modes de fonctionnement,
**caractérisé par le fait que** ledit canal de dérivation est prévu pour relier ledit tuyau frigorifique entre un côté de décharge du compresseur (21) et ledit premier échangeur de chaleur (22) audit tuyau frigorifique entre le dispositif de décompression (23) et un côté d'aspiration du compresseur (21), ou à une chambre de compression du compresseur, et que ledit dispositif de commande (4) est prévu pour effectuer les modes de fonctionnement suivants:
un premier mode de fonctionnement pour faire circuler le réfrigérant déchargé du compresseur (21), par lesdits moyens de commutation de trajet d'écoulement (26), dans le deuxième échangeur de chaleur (24), et pour fermer le dispositif d'ouverture et de fermeture (31), et
un deuxième mode de fonctionnement pour faire circuler le réfrigérant déchargé du compresseur (21), par lesdits moyens de commutation de trajet d'écoulement (26), dans le premier échangeur de chaleur (22), et pour ouvrir le dispositif d'ouverture et de fermeture (31), et dans lequel ledit dispositif de commande (4) est configuré pour déplacer le mode de fonctionnement au deuxième mode de fonctionnement lorsque la température du premier échangeur de chaleur devient inférieure à une température prédéterminée pendant le premier mode de fonctionnement.

2. Générateur d'eau chaude selon la revendication 1,
dans lequel ledit dispositif de commande (4) est configuré pour faire fonctionner le dispositif d'ouverture et de fermeture (31) après que le dispositif de commande (4) a actionné les moyens de commutation de trajet d'écoulement (26), lorsque le premier mode de fonctionnement est déplacé au deuxième mode de fonctionnement.

3. Générateur d'eau chaude selon la revendication 1 ou 2,
dans lequel ladite pluralité de modes de fonctionnement comprend un troisième mode de fonctionnement pour faire circuler le réfrigérant déchargé du compresseur (21), par les moyens de commutation de trajet d'écoulement (26), dans le premier échangeur de chaleur (22), et pour fermer ledit dispositif d'ouverture et de fermeture (31), et dans lequel le dispositif de commande (4) est configuré pour faire fonctionner le compresseur (21) de telle sorte que la fréquence de fonctionnement du compresseur devient inférieure à une valeur maximale de la fréquence de fonctionnement du compresseur pendant le deuxième mode de fonctionnement, lorsque le troisième mode de fonctionnement commence.
